# EUROPEAN PATENT APPLICATION

(11) **EP 3 247 139 A1**
(43) Date of publication of application: **22.11.2017**
(21) Application number: 15877618.7
(22) Date of filing: 15.09.2015
(51) Int. Cl.: H04W 4/24, H04W 88/10, H04W 36/14, H04W 48/18

(54) **METHOD, APPARATUS, AND STORAGE MEDIUM SUPPORTING ACCESS BY MULTIPLE RADIO NETWORKS**

(30) Priority: 15.01.2015 CN 201510021832
(71) Applicant: ZTE Corporation, Shenzhen, Guangdong 518057 (CN)
(72) Inventor: LIU, Lin, Shenzhen Guangdong 518057 (CN); CHENG, Xiang, Shenzhen Guangdong 518057 (CN)
(74) Representative: Deambrogi, Edgardo
(86) International application number: PCT/CN2015/089632
(87) International publication number: WO 2016/112705

(57) **Abstract**

A method supporting access via multiple wireless networks is provided. In the method, a type of a wireless access network of User Equipment (UE) is determined; and the type of the wireless access network of the UE is sent to a core network via a message of an S1 interface. An apparatus supporting access via multiple wireless networks and a storage medium are also provided.

## Description

### Technical Field

The disclosure relates to a wireless access technology, and more particularly, to a method and an apparatus supporting access via multiple wireless networks, and a storage medium.

### Background

Along with emergence of various intelligent terminals, mobile data traffic increases explosively. Even though a cellular network may be evolved to a 5^{th} Generation (5G) mobile communication technology in future, it may still be very difficult to meet the transmission requirement of users on mobile data. In the face of current challenges, the pressure confronted by a mobile network becomes increasingly larger.

As a cost performance ratio of upgrading a network becomes lower and lower, the requirement of operator on development and deployment of new technologies is eased. In order to relieve the pressure brought by explosive growth of the mobile data traffic, operators start to consider solving the capacity upgrade problem by developing and building a heterogeneous access network, for example, by introducing other wireless access networks such as Wireless-Fidelity (WiFi) and femto. The introduction of other wireless access networks may serve as a useful supplement of the mobile network, thereby reducing the operation cost and solving various problems caused by the explosive traffic growth.

A WiFi access network may provide a high-speed access and may support a theoretical rate up to 300M at maximum. The WiFi access network is very competitive relative to a 3^{rd} Generation (3G) mobile communication technology and even a 4^{th} Generation (4G) mobile communication technology. In addition, relative to a mobile network, the construction cost of Wireless Local Area Networks (WLAN) is very low and the investment cost of the WLAN is approximately only 1/10 the investment cost of a Long Term Evolution (LTE) system. Furthermore, WiFi equipment is highly popularized and almost all the existing intelligent mobile terminals are provided with a WiFi module, therefore the acceptability of users would not be an issue. As a result, WiFi has become one of main solutions for shunting mobile internet traffic.

When the capacity is not enough, although the operators can shunt services to a WiFi network by means of a heterogeneous access network, the mobile connections in a heterogeneous network environment are highly complicated due to a fact that an air interface technology, a backhaul technology and a core network technology are mingled. Moreover, the shunting of the mobile internet traffic may need to be implemented by means of a cross-operator interconnection technology, and the situation may be even messier under the occurrence of inter-operator roaming. Under such complicated heterogeneous network environment, how to guarantee a good user experience and to implement seamless fusion of the services between the WiFi and a 3G cellular network is a research hotspot in the field of multi-wireless network access (e.g., access via multiple wireless networks) at present.

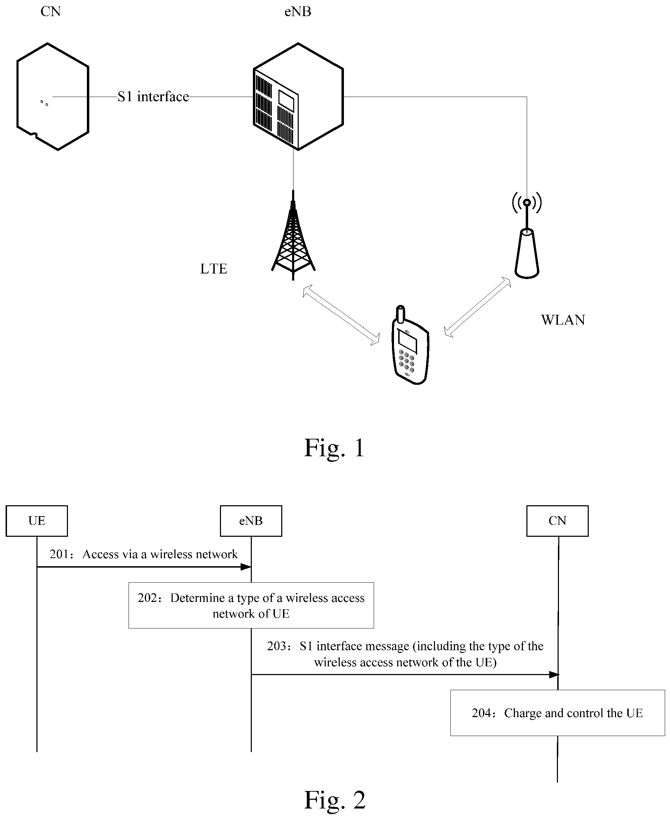

Currently, the WLAN may be directly accessed to a base station (e.g., an evolved Node B (eNB)) of the LTE system, or may access the eNB via a WLAN Access Point (AP). A typical network structure for a hybrid wireless network access of the WLAN and the LTE system is shown in Fig. 1. As shown in Fig. 1, User Equipment (UE) may access the mobile network via an LTE network, and may also access the eNB of the LTE via the WLAN and further to a core network. No matter what type of wireless network via which the UE is accessed, the core network may perform charging under the premise of knowing a type of an access network of the UE. A related wireless communication technology is based on a scenario in which all the UEs access via a single wireless network. As a result, when there are multiple access networks simultaneously, the core network cannot know what type of access network via which the UE is accessed, and thus cannot perform charging properly.

### Summary

Some embodiments of the disclosure provide a method and an apparatus supporting access via multiple wireless networks and a storage medium, which enable a core network to accurately know a type of a wireless access network of User Equipment (UE), thereby implementing accurate charging and control.

The solutions of the embodiments of the disclosure are implemented as follows.

An embodiment of the disclosure provides a method supporting access via multiple wireless networks, which may include the following acts.

A type of a wireless access network of UE is determined.

The type of the wireless access network of the UE is sent to a core network via a message of an S1 interface.

In the embodiment, the act that the type of the wireless access network of the UE is determined may include an act that, when the UE initially accesses a network or an access network of the UE changes, the type of the wireless access network of the UE is determined according to an air interface accessed by the UE.

In the embodiment, the method may further include an act that the message of the S1 interface is extended in advance.

The act that the type of the wireless access network of the UE is sent to the core network via the message of the S1 interface may include but not limited to, the following acts.

The type of the wireless access network of the UE is written into an INITIAL UE MESSAGE field of the extended message of the S1 interface.

The extended message of the S1 interface is sent to the core network.

In the embodiment, the method may further include an act that the UE is charged and controlled by the core network according to the received type of the wireless access network of the UE.

Another embodiment of the disclosure provides an apparatus supporting access via multiple wireless networks, and the apparatus includes: a network type determining module and a network type sending module.

The network type determining module is configured to determine a type of a wireless access network of UE.

The network type sending module is configured to send the type of the wireless access network of the UE to a core network via a message of an S1 interface.

In the embodiment, the network type determining module may be configured to, when the UE initially accesses a network or an access network of the UE changes, determine the type of the wireless access network of the UE according to an air interface accessed by the UE.

In the embodiment, the network type sending module may be configured to:
extend the message of the S1 interface in advance;
write the type of the wireless access network of the UE into an INITIAL UE MESSAGE field of the extended message of the S1 interface; and
send the extended message of the S1 interface to the core network.

In the embodiment, the apparatus may further include a charging module. The charging module may be positioned in the core network, and may be configured to charge and control the UE according to the received type of the wireless access network of the UE.

Still another embodiment of the disclosure provides a computer storage medium, in which a computer program is stored. The computer program is configured to execute the method supporting the access via the multiple wireless networks in the embodiments of the disclosure.

According to the method and the apparatus supporting the access via the multiple wireless networks, and the storage medium provided by some embodiments of the disclosure, a type of a wireless access network of UE is determined first, and then the type of the wireless access network of the UE is sent to a core network via a message of an S1 interface. In this way, when the UE accesses the core network via different wireless networks, the core network can accurately know the type of the wireless network accessed by the UE, and thus, operations such as accurate charging and strategy control may be implemented correspondingly based on the type of the accessed wireless network.

### Brief Description of the Drawings

Fig. 1 is a schematic diagram of a network structure for a hybrid wireless network access of a WLAN and an LTE system;
Fig. 2 is a flowchart of a method supporting access via multiple wireless networks according to a first embodiment of the disclosure;
Fig. 3 is a flowchart of a method supporting access via multiple wireless networks according to a second embodiment of the disclosure; and
Fig. 4 is a schematic diagram of an apparatus supporting access via multiple wireless networks according to an embodiment of the disclosure.

### Detailed Description of the Embodiments

In an embodiment of the disclosure, a method supporting access via multiple wireless networks may include the following acts. A type of a wireless access network of UE is determined. Then the type of the wireless access network of the UE is sent to a core network via a message of an S1 interface.

The embodiment of the disclosure may be applied to a network architecture having multiple types of wireless network accesses. As shown in Fig. 1, the UE may access a mobile communication system via an LTE wireless network or a WLAN wireless network.

The act that the type of the wireless access network of the UE is determined may include the following act. When the UE initially accesses a network or an access network of the UE changes, the type of the wireless access network of the UE may be determined according to an air interface accessed by the UE.

The act that the type of the wireless access network of the UE is sent to the core network via the message of the S1 interface may include, but not limited to, the following acts. The message of the S1 interface is extended in advance. For example, a field for carrying the type of the wireless access network of the UE may be added in the message of the S1 interface, or a reserved field in the message of the S1 interface may be adopted for carrying the type of the wireless access network of the UE. After determining the type of the wireless access network of the UE, the type of the wireless access network of the UE may be written into an INITIAL UE MESSAGE field of the message of the S1 interface. Then, the extended message of the S1 interface may be sent to the core network.

The embodiments of the disclosure only take the INITIAL UE MESSAGE as an example but are not limited to the INITIAL UE MESSAGE. In an implementation process, the type of the wireless access network of the UE may be written to other message fields of an S1 interface, and all of which fall within the scope of protection of the disclosure.

After receiving the type of the wireless access network of the UE in the message of the S1 interface, the core network may adopt a corresponding strategy to charge and control the UE according to the type of the wireless network accessed by the UE.

Implementations for the solutions of the disclosure will be explained in detail with reference to the accompanying drawings and the embodiments. Fig. 2 is a flowchart of a method supporting access via multiple wireless networks according to a first embodiment of the disclosure. In the embodiment, the UE may access the core network via an LTE wireless network. As shown in Fig. 2, the method supporting access via multiple wireless networks in the embodiment may include the following acts.

At act 201, UE accesses a mobile communication system via an LTE wireless network.

In the act, when the UE initially accesses the network, the UE accesses the mobile communication system via the LTE wireless network.

At act 202, an eNB determines a type of a wireless access network of the UE.

In an exemplary embodiment, after the UE establishes a connection with the eNB, the eNB determines that the UE accesses the mobile communication system via the LTE wireless network.

At act 203, the type of the wireless access network of the UE is sent to a core network via a message of an S1 interface.

In an exemplary embodiment, the message of the S1 interface may be extended in advance, for example, a field for carrying the type of the wireless access network of the UE may be added in the message of the S1 interface or a reserved field in the message of the S1 interface may be adopted for carrying the type of the wireless access network of the UE. The eNB may write the type of the wireless access network of the UE into an INITIAL UE MESSAGE field of the extended message of the S1 interface. In the embodiment, the type of the wireless access network of the UE is, for example, the LTE wireless network. The extended message of the S1 interface is sent to the core network.

At act 204, the core network charges and controls the UE by employing charging and control strategies of the LTE according to the received type of the wireless access network of the UE.

In the embodiment of the disclosure, a processing procedure when the UE accesses the mobile communication system via a WLAN is the same as the acts executed when the UE accesses the mobile communication system via the LTE wireless network.

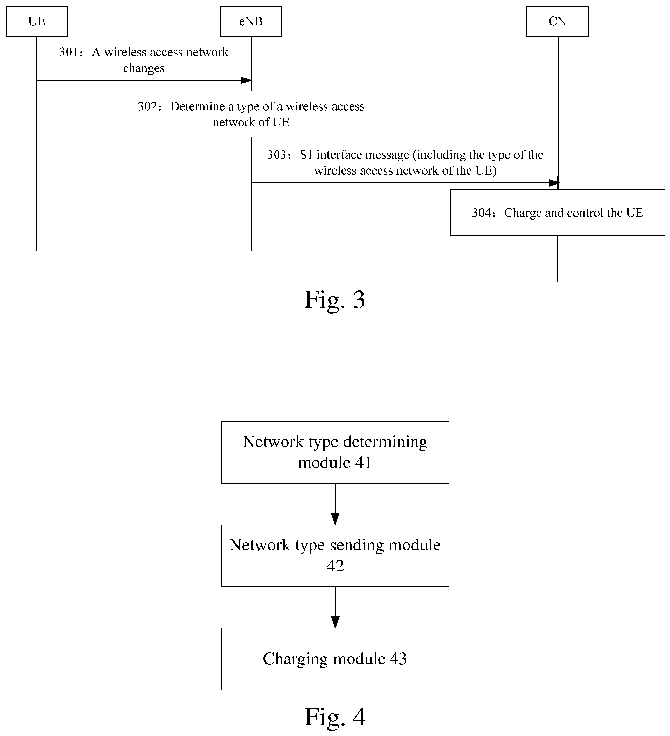

Fig. 3 is a flowchart of a method supporting access via multiple wireless networks according to a second embodiment of the disclosure. The embodiment may be applied to a scenario in which an access network of the UE changes. In an embodiment, when the wireless access network of the UE changes due to reasons such as overlarge load, the method supporting the access via the multiple wireless networks may include the following acts.

At act 301, a wireless access network of UE changes due to reasons such as overlarge load.

For example, the UE may initially access a mobile communication system via an LTE wireless network. However, due to the reasons such as overlarge load of the LTE wireless network, the UE may be switched to access the mobile communication system via a WLAN wireless network.

At act 302, an eNB determines a type of the wireless access network of the UE.

In an exemplary embodiment, after the UE establishes a connection with the eNB, the eNB may determine that the UE accesses the mobile communication system via the WLAN wireless network.

At act 303, a current type of the wireless access network of the UE is sent to a core network via a message of an S1 interface.

In an exemplary embodiment, the message of the S1 interface may be extended in advance, for example, a field for carrying the type of the wireless access network of the UE may be added in the message of the S1 interface or a reserved field in the message of the S1 interface may be adopted for carrying the type of the wireless access network of the UE. The eNB may write the type of the wireless access network of the UE into an INITIAL UE MESSAGE field of the extended message of the S1 interface. In the embodiment, the type of the wireless access network of the UE after the change is, for example, the WLAN wireless network. The extended message of the S1 interface is sent to the core network.

At act 304, the core network charges and controls the UE by employing charging and control strategies of the WLAN according to the received type of the wireless access network of the UE.

The embodiments of the disclosure only take above process as an example. In an implementation process, various adjustments, replacements, deletions and the like may be made to each of the acts according to a practical application scenario. Those skilled in the art may make simple variations and modifications to the embodiments of the disclosure without departing from the scope of the disclosure. For example, under the condition that the embodiments of the disclosure can be realized, the sequence of the above acts may be interchanged appropriately, or the sequence of a part of the acts may be adjusted to form new embodiments. These adjustments all fall within the scope of protection of the disclosure.

An embodiment of the disclosure provides an apparatus supporting access via multiple wireless networks. Fig. 4 is a schematic diagram of an apparatus supporting access via multiple wireless networks according to an embodiment of the disclosure. As shown in Fig. 4, the apparatus includes a network type determining module 41 and a network type sending module 42. Both the network type determining module 41 and the network type sending module 42 may be positioned in an eNB.

The network type determining module 41 may be configured to determine a type of a wireless access network of UE.

In the embodiment of the disclosure, the network type determining module 41 may be configured to, when the UE initially accesses a network or an access network of the UE changes, determine the type of the wireless access network of the UE according to an air interface accessed by the UE.

The network type sending module 42 may be configured to send the type of the wireless access network of the UE to a core network via a message of an S1 interface.

In the embodiment of the disclosure, the network type sending module 42 may be configured to: extend the message of the S1 interface in advance; after determining the type of the wireless access network of the UE, write the type of the wireless access network of the UE into an INITIAL UE MESSAGE field of the message of the S1 interface; and send the extended message of the S1 interface to the core network. As an example, the network type sending module 42 may be configured to extend the message of the S1 interface in advance in the following manner: adding a field for carrying the type of the wireless access network of the UE in the message of the S1 interface or adopting a reserved field in the message of the S1 interface for carrying the type of the wireless access network of the UE

In the embodiment of the disclosure, the apparatus may further include a charging module 43. The charging module 43 may be positioned in the core network, and may be configured to charge and control the UE employing corresponding strategies according to the received type of the wireless access network of the UE.

In the apparatus supporting the access via the multiple wireless networks provided by the embodiments of the disclosure, each of the modules may be implemented via a processor, and may alternatively be implemented via a specific logic circuit. The processor may be a processor on a mobile terminal or a server. In practical application, the processor may be a Central Processing Unit (CPU), a Micro Processor Unit (MPU), a Digital Signal Processor (DSP) or a Field Programmable Gate Array (FPGA), etc.

If being implemented in form of software function module and sold or used as an independent product, the apparatus in the embodiment of the disclosure may be stored in a computer-readable storage medium. Based on such an understanding, the solutions of the embodiment of the disclosure substantially contributing to the conventional art may be embodied in a form of software product. The computer software product may be stored in a storage medium, including a plurality of instructions configured to enable a computer (which may be a personal computer, a server, a network device or the like) to execute all or part of the method in each embodiment of the disclosure. The preceding storage medium may includes various media capable of storing program codes, such as a U disk, a mobile hard disk, a Read-Only Memory (ROM), a magnetic disk or a compact disc. Therefore, the embodiments of the disclosure are not limited to any specific hardware and software combination.

Correspondingly, an embodiment of the disclosure provides a computer storage medium, in which a computer program is stored. The computer program is configured to execute a method supporting access via multiple wireless networks in the embodiments of the disclosure.

The above are only the exemplary embodiments of the disclosure, and are not intended to limit the scope of protection defined by the appended claims of the disclosure.

## Claims

1. A method supporting access via multiple wireless networks, comprising:
determining a type of a wireless access network of User Equipment, UE; and
sending, via a message of an S1 interface, the type of the wireless access network of the UE to a core network.

2. The method as claimed in claim 1, wherein determining the type of the wireless access network of the UE comprises:
when the UE initially accesses a network or an access network of the UE changes, determining the type of the wireless access network of the UE according to an air interface accessed by the UE.

3. The method as claimed in claim 1, wherein the method further comprises: extending the message of the S1 interface in advance;
sending, via the message of the S1 interface, the type of the wireless access network of the UE to the core network comprises:
writing the type of the wireless access network of the UE into an INITIAL UE MESSAGE field of the extended message of the S1 interface; and
sending the extended message of the S1 interface to the core network.

4. The method as claimed in any one of claims 1 to 3, further comprising:
charging and controlling the UE by the core network according to the received type of the wireless access network of the UE.

5. An apparatus supporting access via multiple wireless networks, the apparatus comprising: a network type determining module and a network type sending module, wherein
the network type determining module is configured to determine a type of a wireless access network of User Equipment, UE; and
the network type sending module is configured to send the type of the wireless access network of the UE to a core network via a message of an S1 interface.

6. The apparatus as claimed in claim 5, wherein the network type determining module is configured to: when the UE initially accesses a network or an access network of the UE changes, determine the type of the wireless access network of the UE according to an air interface accessed by the UE.

7. The apparatus as claimed in claim 5, wherein the network type sending module is configured to:
extend the message of the S1 interface in advance;
write the type of the wireless access network of the UE into an INITIAL UE MESSAGE field of the extended message of the S1 interface; and
send the extended message of the S1 interface to the core network.

8. The apparatus as claimed in any one of claims 5 to 7, further comprising:
a charging module, wherein the charging module is positioned in the core network, and is configured to charge and control the UE according to the received type of the wireless access network of the UE.

9. A computer storage medium, in which a computer executable instruction is stored, wherein the computer executable instruction is configured to execute the method supporting the access via the multiple wireless networks as claimed in any one of claims 1 to 4.
